# EUROPEAN PATENT APPLICATION

(11) **EP 4 473 882 A1**
(43) Date of publication of application: **11.12.2024**
(21) Application number: 23177856.4
(22) Date of filing: 07.06.2023
(51) Int. Cl.: A47J 45/06

(54) **WELDING STUD AND POT HAVING THE WELDING STUD**

(71) Applicant: Ningbo Golden Elephant Kitchenware Co., Ltd, Ningbo Zhejiang (CN)
(72) Inventor: Wang, Cheng, Ningbo (CN)
(74) Representative: karo IP

(57) **Abstract**

A welding stud comprises a welding stud body; the front end of the welding stud body is welded on a pot body, and the rear end side of the welding stud body is provided with at least two connecting blocks; the connecting blocks are inserted into screw hole sites of a handle; and a connecting hole through front and back is arranged in each connecting block. A pot has the above welding stud. In the welding stud and the pot having the welding stud in the present invention, the welding stud can be welded on the pot body of the pot by only one welding, so as to facilitate the installation of the handle with a plurality of screw hole sites, greatly increase the installation working efficiency of the pot and reduce the repair rate of the pot. In addition, because the spacing between the connecting blocks is set according to the spacing of the screw hole sites during production, the size can be accurately controlled, and the installation efficiency of the handle can also be greatly increased. A small-caliber pot body is only welded once, so that the operation is convenient.

## Description

### Technical Field

The present invention relates to the technical field of pots, and particularly relates to a welding stud and a pot having the welding stud.

### Background

Welding studs need to be welded on pot bodies at first when handles are installed on pots, and then the handles are tightened on the welding studs through bolts or screws. To meet the installation requirements or increase the fastness when the handles are installed on some pot bodies, two welding studs need to be welded on the pot body, and the two welding studs are inserted into two screw hole sites of the handle and then connected through two bolts or screws. Existing welding studs are single-hole (one connecting hole) and single-point (one welding point) welding studs. To facilitate the installation of the handle with two screw hole sites, two single-hole and single-point welding studs generally need to be welded on the pot body. Thus, the manufacturing efficiency is low, the repair rate is high (the more the welding studs are welded, the greater the probability of deviation is), and a distance between the two welding studs is difficult to control. If the distance between the two welding studs is too large or too small, the installation of the handle may be affected. In addition, when the caliber of the pot body is less than 24 cm, it is troublesome and difficult to weld two single-hole and single-point welding studs because there is no position in a welder head.

### Summary

One purpose of the present invention is to provide a welding stud. At least two connecting blocks are arranged at the rear end side of a welding stud body, and connecting holes through the front and back are arranged on the connecting blocks, so that a welding stud for welding with a pot body can be simultaneously connected with a plurality of screw hole sites of a handle; and the structure is simple and welding is convenient.

Another purpose of the present invention is to provide a pot with the welding stud. The above welding stud is connected between a pot body of the pot and a handle, so that the installation working efficiency of the pot is high and the repair rate is low.

To achieve any of the above purposes, the present invention adopts the following technical solution:
A welding stud comprises a welding stud body; the front end of the welding stud body is welded on a pot body, and the rear end side of the welding stud body is provided with at least two connecting blocks; the connecting blocks are inserted into screw hole sites of a handle; and a connecting hole through front and back is arranged in each connecting block.

Preferably, a vertical plane is arranged at the welding place of the front end of the welding stud body.

Preferably, the vertical plane is provided with a convex column.

Preferably, a bevel is arranged at the welding place of the front end of the welding stud body.

Preferably, the bevel is provided with a convex column.

Preferably, an included angle between the bevel and a horizontal plane is 75°.

Preferably, the included angle between the bevel and the horizontal plane is 65°.

Preferably, the included angle between the bevel and the horizontal plane is 60°.

Preferably, two connecting blocks are arranged side by side on two opposite sides of the rear end of the welding stud body.

The present invention further provides a pot which has the above welding stud.

Compared with the prior art, the present invention has the following beneficial effects:
In the welding stud and the pot having the welding stud in the present invention, the welding stud can be welded on the pot body of the pot by only one welding, so as to facilitate the installation of the handle with a plurality of screw hole sites, greatly increase the installation working efficiency of the pot and reduce the repair rate of the pot. In addition, because the spacing between the connecting blocks is set according to the spacing of the screw hole sites during production, the size can be accurately controlled, and the installation efficiency of the handle can also be greatly increased. A small-caliber pot body is only welded once, so that the operation is convenient.

### Description of Drawings

Fig. 1 is a three-dimensional schematic diagram 1 of a welding stud in embodiment 1 of a welding stud and a pot having the welding stud in the present invention.
Fig. 2 is a three-dimensional schematic diagram 2 of a welding stud in embodiment 1 of a welding stud and a pot having the welding stud in the present invention.
Fig. 3 is a three-dimensional schematic diagram of a welding stud in embodiment 2 of a welding stud and a pot having the welding stud in the present invention.
Fig. 4 is a three-dimensional schematic diagram of a welding stud in embodiment 3 of a welding stud and a pot having the welding stud in the present invention.
Fig. 5 is a three-dimensional schematic diagram of a welding stud in embodiment 4 of a welding stud and a pot having the welding stud in the present invention.
Fig. 6 is a disassembly diagram of a pot in embodiment 5 of a welding stud and a pot having the welding stud in the present invention.

Reference signs: 1 welding stud body; 11 connecting block; 12 bevel; 13 convex column; 14 connecting hole; 15 vertical plane; 2 pot body; 3 handle; 31 connecting seat; 311 limiting block; 312 screw hole site; 313 second threaded connecting hole; 4 encircling ring.

### Detailed Description

The present invention is further described below in detail in combination with the drawings and embodiments.

### Embodiment 1

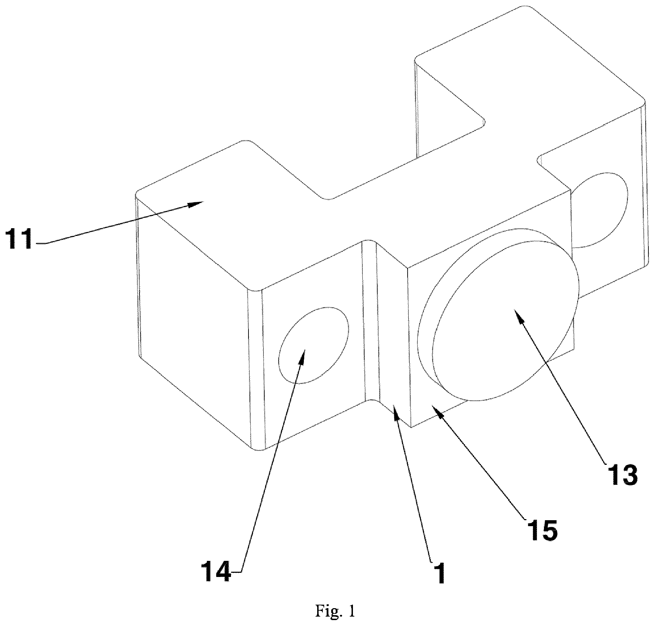

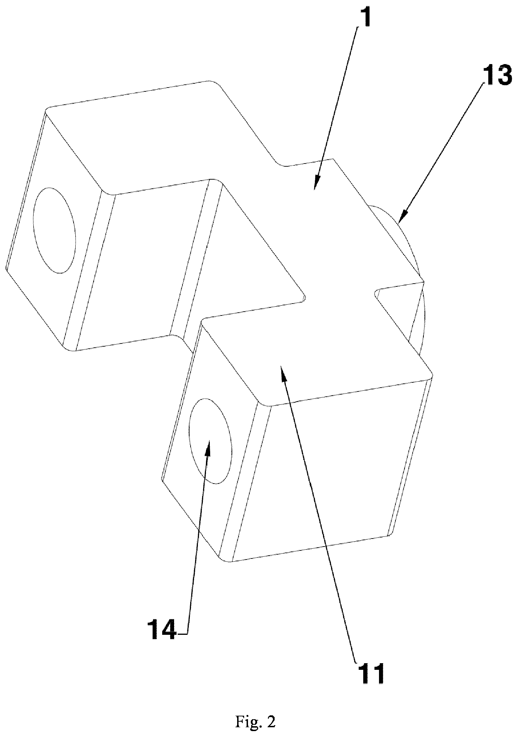

As shown in Fig. 1 to Fig. 2, a welding stud comprises a welding stud body 1; the front end of the welding stud body 1 is welded on a pot body; a vertical plane 15 is arranged at the welding place of the front end of the welding stud body 1; and the vertical plane 15 is provided with a convex column 13. The convex column 13 is arranged here, which can ensure that there is a gap between the vertical plane 15 and the external surface of the pot body, so as to facilitate the welding of the welding stud on the pot body. Two connecting blocks 11 are arranged side by side at the left and right sides of the rear end of the welding stud body 1; the connecting blocks 11 and the welding stud body 1 are formed integrally; the connecting blocks 11 are inserted into screw hole sites of a handle; a connecting hole 14 through front and back is arranged in each connecting block 11; and the connecting blocks 11 are connected with the handle through the connecting holes 14.

In use, the two connecting blocks are firstly inserted into the two screw hole sites of the handle, then the two connecting blocks are connected with the handle through two bolts or screws, and the front end of the welding stud body is welded to the pot body, so that the pot is connected.

### Embodiment 2

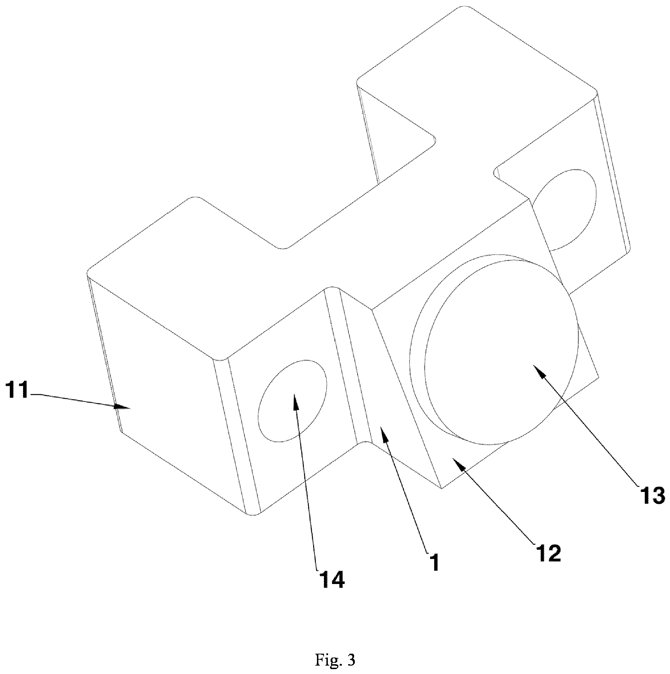

As shown in Fig. 3, a welding stud comprises a welding stud body 1; the front end of the welding stud body 1 is welded on a pot body; a bevel 12 is arranged at the welding place of the front end of the welding stud body 1; an included angle between the bevel 12 and a horizontal plane is 75°; and the bevel 12 is provided with a convex column 13. The convex column 13 is arranged here, which can ensure that there is a gap between the bevel 12 and the external surface of the pot body, so as to facilitate the welding of the welding stud on the pot body. Two connecting blocks 11 are arranged side by side at the left and right sides of the rear end of the welding stud body 1; the connecting blocks 11 and the welding stud body 1 are formed integrally; the connecting blocks 11 are inserted into screw hole sites of a handle; a connecting hole 14 through front and back is arranged in each connecting block 11; and the connecting blocks 11 are connected with the handle through the connecting holes 14, wherein firstly, the bevel 12 is arranged, which increases the contact surface between the welding stud and the external surface of the pot body to ensure firm welding and secondly, the bevel 12 is arranged so that the connecting blocks are tilted upward slightly to facilitate the installation of the handle and meet the normal use.

In use, the two connecting blocks are firstly inserted into the two screw hole sites of the handle, then the two connecting blocks are connected with the handle through two bolts or screws, and the front end of the welding stud body is welded to the pot body, so that the pot is connected.

### Embodiment 3

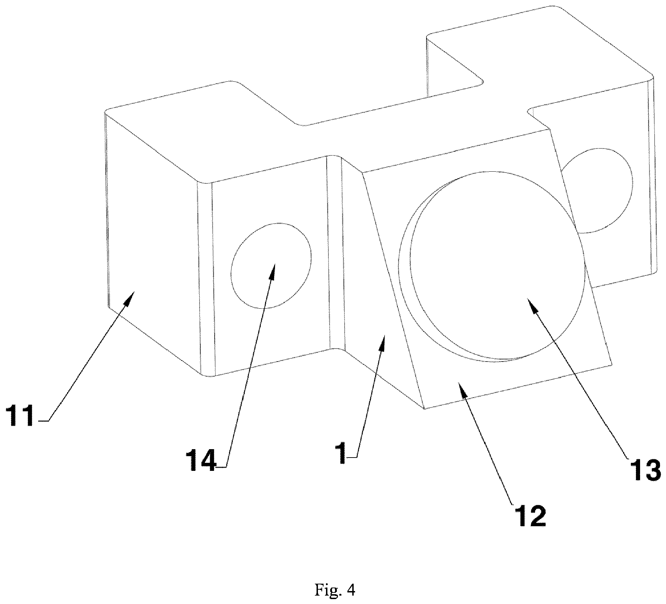

As shown in Fig. 4, a welding stud comprises a welding stud body 1; the front end of the welding stud body 1 is welded on a pot body; a bevel 12 is arranged at the welding place of the front end of the welding stud body 1; an included angle between the bevel 12 and a horizontal plane is 65°; and the bevel 12 is provided with a convex column 13. The convex column 13 is arranged here, which can ensure that there is a gap between the bevel 12 and the external surface of the pot body, so as to facilitate the welding of the welding stud on the pot body. Two connecting blocks 11 are arranged side by side at the left and right sides of the rear end of the welding stud body 1; the connecting blocks 11 and the welding stud body 1 are formed integrally; the connecting blocks 11 are inserted into screw hole sites of a handle; a connecting hole 14 through front and back is arranged in each connecting block 11; and the connecting blocks 11 are connected with the handle through the connecting holes 14, wherein firstly, the bevel 12 is arranged, which increases the contact surface between the welding stud and the external surface of the pot body to ensure firm welding and secondly, the bevel 12 is arranged so that the connecting blocks are tilted upward slightly to facilitate the installation of the handle and meet the normal use.

In use, the two connecting blocks are firstly inserted into the two screw hole sites of the handle, then the two connecting blocks are connected with the handle through two bolts or screws, and the front end of the welding stud body is welded to the pot body, so that the pot is connected.

### Embodiment 4

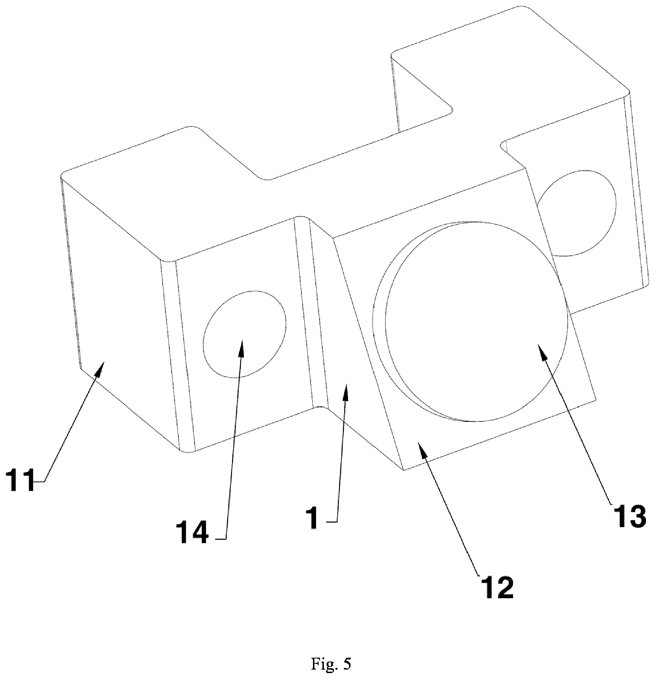

As shown in Fig. 5, a welding stud comprises a welding stud body 1; the front end of the welding stud body 1 is welded on a pot body; a bevel 12 is arranged at the welding place of the front end of the welding stud body 1; an included angle between the bevel 12 and a horizontal plane is 60°; and the bevel 12 is provided with a convex column 13. The convex column 13 is arranged here, which can ensure that there is a gap between the bevel 12 and the external surface of the pot body, so as to facilitate the welding of the welding stud on the pot body. Two connecting blocks 11 are arranged side by side at the left and right sides of the rear end of the welding stud body 1; the connecting blocks 11 and the welding stud body 1 are formed integrally; the connecting blocks 11 are inserted into screw hole sites of a handle; a connecting hole 14 through front and back is arranged in each connecting block 11; and the connecting blocks 11 are connected with the handle through the connecting holes 14, wherein firstly, the bevel 12 is arranged, which increases the contact surface between the welding stud and the external surface of the pot body to ensure firm welding and secondly, the bevel 12 is arranged so that the connecting blocks are tilted upward slightly to facilitate the installation of the handle and meet the normal use.

In use, the two connecting blocks are firstly inserted into the two screw hole sites of the handle, then the two connecting blocks are connected with the handle through two bolts or screws, and the front end of the welding stud body is welded to the pot body, so that the pot is connected.

### Embodiment 5

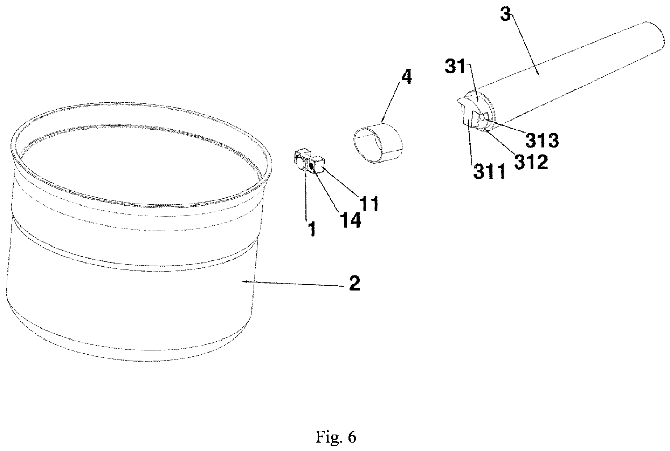

As shown in Fig. 6, the present embodiment provides a pot which has the welding stud provided in embodiment 1, a handle 3 and a pot body 2. The connecting holes 14 on the welding stud are first threaded connecting holes; the inner end of the handle 3 is provided with a connecting seat 31; the connecting seat 31 is provided with second threaded connecting holes 313 matched with the first threaded connecting holes; and the handle 3 is connected with the welding stud through screws. Further, a limiting groove is formed between the two connecting blocks 11. The connecting seat 31 is provided with a limiting block 311 matched with the limiting groove; the connecting seat 31 is provided with two screw hole sites 312 matched with the two connecting blocks 11 at both sides of the limiting block 311; the number of the second threaded connecting holes 313 is two, and the second threaded connecting holes are arranged in the two screw hole sites 312 respectively; and an encircling ring 4 is arranged outside the welding stud 7 and the connecting seat 31.

During installation of the pot, the two connecting blocks of the welding stud are firstly inserted into the two screw hole sites of the handle, then the two connecting blocks of the welding stud are connected with the handle through two bolts or screws, the encircling ring is sleeved outside the connecting seat and the welding stud, and the front end of the welding stud body is welded to the pot body, so that the pot is connected.

### Embodiment 6

The present embodiment provides a pot which has the welding stud provided in embodiment 2, a handle and a pot body.

### Embodiment 7

The present embodiment provides a pot which has the welding stud provided in embodiment 3, a handle and a pot body.

### Embodiment 8

The present embodiment provides a pot which has the welding stud provided in embodiment 4, a handle and a pot body.

In the welding stud and the pot having the welding stud in the present invention, the welding stud can be welded on the pot body of the pot by only one welding, so as to facilitate the installation of the handle with a plurality of screw hole sites, greatly increase the installation working efficiency of the pot and reduce the repair rate of the pot. In addition, because the spacing between the connecting blocks is set according to the spacing of the screw hole sites during production, the size can be accurately controlled, and the installation efficiency of the handle can also be greatly increased. A small-caliber pot body is only welded once, so that the operation is convenient.

Finally, it should be noted that the above embodiments are only used for describing the technical solutions of the present invention rather than limitation. Although the present invention is described in detail by referring to the above embodiments, those ordinary skilled in the art should understand that: the technical solution recorded in each of the above embodiments can be still amended, or some technical features therein can be replaced equivalently. However, these amendments or replacements do not enable the essence of the corresponding technical solutions to depart from the spirit and the scope of the technical solutions of various embodiments of the present invention.

## Claims

1. A welding stud, comprising a welding stud body, wherein the front end of the welding stud body is welded on a pot body; the rear end side of the welding stud body is provided with at least two connecting blocks; the connecting blocks are inserted into screw hole sites of a handle; and a connecting hole through front and back is arranged in each connecting block.

2. The welding stud according to claim 1, wherein a vertical plane is arranged at the welding place of the front end of the welding stud body.

3. The welding stud according to claim 2, wherein the vertical plane is provided with a convex column.

4. The welding stud according to claim 1, wherein a bevel is arranged at the welding place of the front end of the welding stud body.

5. The welding stud according to claim 4, wherein the bevel is provided with a convex column.

6. The welding stud according to claim 4, wherein an included angle between the bevel and a horizontal plane is 75°.

7. The welding stud according to claim 4, wherein the included angle between the bevel and the horizontal plane is 65°.

8. The welding stud according to claim 4, wherein the included angle between the bevel and the horizontal plane is 60°.

9. The welding stud according to claim 1, wherein two connecting blocks are arranged side by side on two opposite sides of the rear end of the welding stud body.

10. A pot, having the welding stud of any one of claims 1-9.
